# EUROPÄISCHE PATENTSCHRIFT

(11) **EP 0 803 549 B1**
(45) Veröffentlichungstag und Bekanntmachung des Hinweises auf die Patenterteilung: **19.09.2001**
(21) Anmeldenummer: 97810238.2
(22) Anmeldetag: 17.04.1997
(51) Int. Cl.: C09C 1/00, C08K 3/00, C09D 7/12, C09D 5/36, C09C 1/64, C09C 1/66, C09C 1/62, C09C 1/46, C09C 1/24, C08K 9/02

(54) **Farbige Glanzpigmente**
Brilliant coloured pigments
Pigments brillants colorés

(30) Priorität: 25.04.1996 CH 105396
(43) Veröffentlichungstag der Anmeldung: 29.10.1997
(73) Patentinhaber: Ciba Specialty Chemicals Holding Inc., 4057 Basel (CH)
(72) Erfinder: Bujard, Patrice, 1784 Courtepin (CH); Bonnard, Natacha, 1474 Chables (CH)

(56) Entgegenhaltungen:
- EP-A- 0 520 720
- EP-A- 0 571 836
- EP-A- 0 579 091
- EP-A- 0 708 154
- DE-A- 4 104 310
- US-A- 3 438 796
- DATABASE WPI Section Ch, Week 9150 Derwent Publications Ltd., London, GB; Class A26, AN 91-364579 XP002110019 & JP 03 243666 A (NIPPON SHEET GLASS CO LTD), 30. Oktober 1991 (1991-10-30)

## Beschreibung

Die Erfindung betrifft farbige Glanzpigmente mit einem transparenten oder metallisch reflektierenden Kern, mindestens einer aus einem Siliciumoxid der Zusammensetzung SiO_{0,25} bis SiO_{0,95} bestehenden Beschichtung und gegebenenfalls weiterer Beschichtungen, Beschichtungsverfahren durch Aufdampfen von metallischem Silicium in Gegenwart von Sauerstoff, gegebenenfalls unter Veränderung dessen Partialdruckes, sowie die Verwendung dieser Glanzpigmente zum Pigmentieren von Kunststoffen, Lacken und Druckfarben, und pigmentierte Stoffzusammensetzungen enthaltend diese Glanzpigmente.

Die Erfindung gehört zum Gebiet der Effektpigmente, das heisst reflektierender flacher Teilchen, deren Strahlungsreflexion je nach Winkel zur flachen Oberfläche unterschiedlich hell ist und/oder ein anderes Reflexionsspektrum aufweist. In einer mit Effektpigmenten lackierten Oberfläche, zum Beispiel, pflegen die Effektpigmentteilchen sich innerhalb der Lackierung weitgehend parallel zur Oberfäche zu richten, so dass die von einer fixen weissen Lichtquelle beleuchtete, farbige Lackoberfläche je nach Ansichtswinkel und Beschaffenheit des Effektpigments verschiedene Farben aufweisen kann. Effektpigmente, welche zum Beispiel in einer auf einer Fahrzeugkarrosserie angebrachten Lackierungsschicht inkorporiert sind, verleihen deshalb diesem Fahrzeug Attraktivität und demzufolge auch einen höheren Wert

Das auf einem Effektpigment auffallende Licht wird zum grössten Teil reflektiert, aber auch zum kleineren Teil absorbiert. Durch das Aufbringen dünner Schichten auf dem flachen Pigmentkem entstehen Interferenzphänomene, wobei die Intensität und das Spektrum des reflektierten Strahles je nach Einfalls- und Betrachtungswinkel variieren.

Übliche Interferenzpigmente bestehen aus einem plättchenförmigen Kem, der mit farblosen Oxiden wie zum Beispiel Titandioxid umhüllt ist Dabei liegt das Titandioxid bevorzugt in einer gut kristalliner Form wie zum Beispiel Rutil vor (EP 271 767). Darauf kann noch eine weitere Schicht kommen, welche gegebenenfalls meist aus einem farbigen anorganischen Stoff wie zum Beispiel Eisenoxid besteht. Die Sättigung solcher Pigmente lässt jedoch im allgemeinen zu wünschen übrig.

Als Kem kommen nach EP 381 047 auch plättchenförmige organische Pigmente in Frage, jedoch ist die Auswahl auf nur wenige Pigmente wie β-Phthalocyanin, Fluororubin und rotes Perylen beschränkt, und die Herstellung geeigneter plättchenförmiger organischer Pigmente ist nicht unkompliziert. WO 93/08237 schlägt eine weitere Verbesserung vor, indem eine mit Pigmenten gefärbte Matrix als Kern dient, welche zum Beispiel aus Siliciumdioxid, Silikaten, Boroxid, Boraten, Aluminiumoxid, Aluminaten oder anderen Materialen mit ähnlichen Eigenschaften besteht.

Besonders blaustichige Pigmente werden nach DE 38 08 070 durch Nachbehandlung von mit Titanoxid beschichtetem Glimmer mit Ammoniak bei zirka 800°C erhalten, wobei die Färbung aus dem gekoppelten, unzertrennbaren Einfluss von blau vermuteten oxidischen Titan(III)-Verbindungen und dunklem Titanmonoxid stammt. Dies führt jedoch unerwünschterweise zu einer starken Lichtabsorption in der äussersten Schicht des Pigments. Ein Glimmer kann nach DE 34 33 657 auch umgekehrt mit einer ersten Schicht aus niedrigen Oxiden des Titans und einer zweiten Schicht aus Titandioxid überzogen werden. Beide Verfahren sind jedoch aufwendig und verlangen sehr hohe Temperaturen, so dass sie nur zur Beschichtung von Glimmer oder ähnlich glühstabilen Substanzen geeignet sind.

In US 5,135,812 werden Pigmentpartikel vorgeschlagen, welche durch multiple Schichten von Dielektrika gebildet werden. Infolge der Vielzahl nötiger Schichten ist die Herstellung solcher Partikel schwierig, und die Reflexionsfarben haben eine schwache Sättigung.
US 5,135,812 bevorzugt deshalb Partikel, welche einen reflektierenden metallischen Kem, eine dielektrische Schicht (z.B. SiO₂, MgF₂ oder Al₂O₃) und eine halbtransparente Metallschicht (z.B. Cr) aufweisen. Die halbtransparente Metallschicht kann auch Bestandteil der dielektrischen Schicht sein, wobei man dann mit einem weitgehend kristallinen, sogenannten "cermet" zu tun hat (z.B. Cr oder Ni eingebettet in SiO oder SiO₂, wie in EP 27 718 beschrieben).

Kleinste Abweichungen in der Schichtdicke oder in der Konzentration des Metalls führen jedoch insbesondere bei einer Vielzahl von Schichten zu unerwünschte Änderungen des Farbtons, so dass eine sehr kostspielige, exakte Steuerung des Beschichtungsprozesses für ein qualitativ hochstehendes Produkt nötig ist. Weiter lassen sich Schwermetalle meist erst bei sehr hohen Temperaturen aufdampfen, oder dann nur ausgehend von toxischen Verbindungen wie Metallcarbonylen. Schwermetalle sind femer aus ökologischen Gründen unerwünscht und in der zur Aufdampfung notwendigen Form und Reinheit teuer; zudem können blättrige abgeschälte Partikel zu Problemen führen, wie zum Beispiel Verschleiss der Düse beim Spritzen. Wie in EP 571 836 und EP 668 329 beschrieben, sollten ausserdem solche Metallschichten bevorzugt feinkristallin sein und ihrer mangelhafter Umweltbeständigkeit wegen durch eine weitere, hochbrechende Schutzschicht versehen werden. Schliesslich sind solche Metallschichten an sich ebenfalls schwarz, so dass auch hier eine relativ geringe Farbsättigung resultiert.

DE 43 41 162 beschreibt farbige Beschichtungen, welche aus alternierenden, verschiedene Mengen Farbmittel enthaltenden Dielektrikumschichten bestehen, wobei das Dielektrikum Siliciumdioxid sein kann, und diese Schichten gegebenenfalls zwecks Verbesserung der Oxydation einem Sauerstoffpartialdruck exponiert werden können. Solche Beschichtungen eignen sich jedoch keinesfalls als Pigmente.

Letztlich beschreibt WO 94/03774 optoanalytische Methoden und Geräte, worin ein Siliciumwafer mit 55 nm (550 Å) Siliciummonoxid beschichtet ist, wobei eine goldige lnterferenzfarbe entsteht. Als weitere Schicht ist auf dem Siliciummonoxid eine Bisaminosilanschicht aufgebracht. Die Oberfläche solcher Detektoren ist für den einmaligen, kurzzeitigen Gebrauch in der medizinischen Analytik bestimmt und ist infolge ihrer hohen chemischen Empfindlichkeit zur Beschichtung von Pigmenten völlig ungeeignet.

Ein Ziel der Erfindung war, hochwertige Effektpigmente verfügbar zu machen, welche dem Medium, worin sie inkorporiert werden, bei allen Blickwinkeln hochgesättigte und helle Farben verleihen, wobei der Farbunterschied zwischen einer flachen und einer steilen Ansicht visuell möglichst gross sein soll (hohe Goniochromatizität).

Besonders erwünscht waren dabei Effektpigmente, welche bei der Kombination mit üblichen transparenten Farbpigmenten möglichst hohe Farbsättigungen ergeben.

Ein anderes Ziel der Erfindung lag darin, Effektpigmente verfügbar zu machen, welche schwermetallfrei sind und ökologisch bedenkenlos entsorgt werden können.

Ein weiteres Ziel der Erfindung war ferner, Effektpigmente verfügbar zu machen, welche nach möglichst einfachen, verhältnismässig billigen und ergiebigen Methoden hergestellt werden können.

Letztlich war auch ein Ziel der Erfindung, dass Effektpigmente verschiedener Farben mit geringem Aufwand präzis reproduzierbar nach demselben Prinzip hergestellt werden können, wobei zur Erzielung der verschiedenen gewünschten Farben jeweils nur wenige Parameter geändert werden müssen.

Diesen Zielen konnte überraschend mit den erfindungsgemässen Pigmenten in besonders hohem Mass entsprochen werden.

Die Erfindung betrifft deshalb ein farbiges Pigment, enthaltend
(a) einen aus einem im wesentlichen transparenten oder metallisch reflektierenden Material bestehenden Kern, und
(b) mindestens eine im wesentlichen aus einem oder mehreren Siliciumoxiden bestehende Beschichtung,
dadurch gekennzeichnet, dass das molare Verhältnis von Sauerstoff zu Silicium im Mittelwert der Beschichtung (b) von 0,25 bis 0,95 beträgt.

Beim Kern handelt es sich im allgemeinen um ein bekanntes oder nach bekannten Methoden aus bekannten Stoffen herstellbares plättchenförmiges Partikel mit einer Länge von 1 bis 200 µm, einer Breite von 1 bis 200 µm und einer Dicke von 0,01 bis 5 µm, besonders bevorzugt mit einer Länge von 1 bis 50 µm, einer Breite von 1 bis 50 µm und einer Dicke bis 2 µm. Diese Pigmentpartikel können auf konventionelle Weise in ein hochmolekulares organisches Marterial zur Färbung desselben eingearbeitet werden.

Die erfindungsgemässen Beschichtungen können aber auch direkt auf ein zu färbendes Substrat mit mindestens einer Dimension grösser als 200 µm gebildet werden, dessen im wesentlichen glatte Oberfläche in diesem Fall als Kern dient Eine im wesentlichen glatte Oberfläche schliesst eine Oberflächenrauhigkeit von bis zu etwa 2 µm nicht aus, und kann sowohl eben sein als auch eine beliebige dreidimensionale Form aufweisen (zum Beispiel ein Stück Blech oder Draht). Dabei wird die Pigmentierung unmittelbar bei der Herstellung der erfindungsgemässen, aus einem oder mehreren Siliciumoxiden bestehenden Beschichtung der Zusammensetzung SiO_{0,25} bis SiO_{0,95} direkt auf dem Substrat erzeugt, wo die färberischen Eigenschaften der erfindungsgemässen Beschichtung von grösstem Nutzen sind. Der Umweg über Pigmentteilchen als Farbübermittler entfällt.

Die Erfindung betrifft deshalb auch ein beschichtetes transparentes oder metallisch reflektierendes Substrat mit im wesentlichen glatter Oberfläche und mindestens einer Dimension grösser als 200 µm, enthaltend eine Schicht aus einem oder mehreren Siliciumoxiden, dadurch gekennzeichnet, dass das molare Verhältnis von Sauerstoff zu Silicium im Mittelwert dieser Siliciumoxidschicht von 0,25 bis 0,95 beträgt.

Der Kern besteht in beiden Fällen aus einem im wesentlichen transparenten oder bevorzugt aus einem metallisch reflektierenden Material.

Besteht der Kem aus einem metallisch reflektierenden Material, so handelt es sich dabei bevorzugt um Ag, Al, Au, Cu, Cr, Ge, Mo, Ni, Si, Ti, deren Legierungen, Graphit, Fe₂O₃ oder MoS₂, besonders bevorzugt um Al oder MoS₂. Je nach Material kann sich gegebenenfalls an der Oberfläche des Kerns eine natürliche, nicht störende Oxidschicht bilden. Ganz besonders bevorzugte Effektpigmente haben einen Kem, welcher mindestens 35% des senkrecht auf dessen Oberfläche einfallenden Lichtes im Bereich von 380 bis 800 nm reflektiert.

Der Kern kann andererseits aus einem im wesentlichen transparenten Material bestehen. Darunter wird ein Material verstanden, dessen Absorptionskoeffizient k im Bereich zwischen 380 und 800 nm höchstens 0,02 beträgt. Besteht der Kem aus einem im wesentlichen transparenten Material, so handelt es sich dabei bevorzugt um Glimmer.

Die Beschichtung (b) besteht im wesentlichen aus Siliciumoxiden, wobei das molare Verhältnis von Sauerstoff zu Silicium im Mittelwert der Beschichtung (b) von 0,25 bis 0,95, bevorzugt von 0,6 bis 0,8 beträgt. Die Schichtdicke der Beschichtung (b) beträgt bevorzugt von 10 bis 500 nm, besonders bevorzugt von 70 bis 500 nm. Aus den ESCA-Daten (electron spectroscopy for chemical analysis) ist ersichtlich, dass es sich dabei im allgemeinen um ein inniges weitgehend amorphes Gemisch von Verbindungen mit Silicium in verschiedenen Oxidationszuständen handelt, jedoch ist die genaue Struktur nicht bekannt. Gleichwohl wurde sehr überraschend festgestellt, dass die Beschichtung (b) der angegebenen Zusammensetzung einen unerklärten, entscheidenden Einfluss auf die optischen Eigenschaften der erfindungsgemässen Pigmente ausübt.

Die Reinheit der Beschichtung (b) ist nicht kritisch. Ein ganz besonderer Vorteil der Erfindung ist daher, dass auf die Verwendung hochreines Siliciums als Ausgangsstoff verzichtet werden kann. Vielmehr kann die Beschichtung (b) ausgehend von billigem gewöhnlichem Silicium hergestellt werden, zum Beispiel aus Silicium enthaltend 98 Gew.-% Si (S-1194, Cerac Inc.) oder 97 Gew.-% Si (85353, Fluka AG). Auch die übrigen Chemikalien müssen nicht hochrein sein, zum Beispiel genügen bei der Aufdampfung in Gegenwart von Sauerstoff Sauerstoff mit einem Gehalt von 98 Volumen-%, oder sogar mit Sauerstoff angereicherte Luft mit einem Sauerstoff-Gehalt von nur 95 oder 90 Volumen-%.

Die Beschichtung (b) kann demzufolge noch weitere Komponenten enthalten, deren Gesamtmenge jedoch gegebenenfalls im allgemeinen möglichst niedrig, zweckmässig unterhalb 10 Gew.-% gehalten werden sollte.

Die erfindungsgemässen Glanzpigmente weisen bevorzugt noch eine weitere, von der erstgenannten Beschichtung unterschiedliche Beschichtung auf.

Die Erfindung betrifft deshalb auch ein farbiges Glanzpigment, enthaltend
(a) einen aus einem im wesentlichen transparenten oder metallisch reflektierenden Material bestehenden Kem,
(b) mindestens eine im wesentlichen aus einem oder mehreren Siliciumoxiden bestehende Beschichtung, und
(c) mindestens eine weitere, auf die gleiche Seite des Kerns (a) wie die Beschichtung (b) angebrachte, aus einem beliebigen festen Material bestehende Beschichtung, deren Zusammensetzung von derjenigen der Beschichtung (b) unterschiedlich ist,
in beliebiger relativer Anordnung der Beschichtungen (b) und (c) bezüglich dem Kern (a), dadurch gekennzeichnet, dass das molare Verhältnis von Sauerstoff zu Silicium im Mittelwert der Beschichtung (b) von 0,25 bis 0,95 beträgt.

Die Beschichtung (c) kann auch auf ein glattes Substrat mit mindestens einer Dimension grösser als 200 µm zusätzlich angebracht werden.

Das feste Material der Beschichtung (c) ist vorteilhaft ein Metalloxid, wie zum Beispiel TiO₂, ZrO₂, SiO, SiO₂, SnO₂, GeO₂, ZnO, Al₂O₃, V₂O₅, Fe₂O₃, Cr₂O₃, PbTiO₃ oder CuO, oder ein Gemisch davon. Die Beschichtung (c) kann aber auch beispielsweise aus einem beliebigen der vielen, dem Fachmann ebenfalls bestens bekannten dielektrischen Materialien bestehen, deren spezifischer elektrischer Widerstand nach der üblichen Definition mindestens 10¹⁰ Ω·cm beträgt.

Die relative Anordnung der Beschichtungen (b) und (c) bezüglich dem Kern (a) kann beliebig sein. Eine erste Ausführungsform ist diejenige, worin die Beschichtung (b) sich zwischen dem Kern (a) und der Beschichtung (c) befindet, insbesondere worin die Beschichtung (c) eine Schichtdicke von 0,1 bis 200 nm aufweist.

In dieser ersten Ausführungsform hat die Beschichtung (c) vor allem eine Schutzfunktion, so dass deren Brechungsindex keinen Grenzen bei der Auswahl unterworfen ist. Im allgemeinen wird man deshalb für die Beschichtung (c) ein Material wählen, welches sich leicht beschichten lässt und eine stabile Schicht ergibt. Die Beschichtung (c) kann sich auch auf natürlicher Weise aus der Oberfläche der zuerst aufgetragenen Beschichtung (b) bilden, wobei dieser natürliche Prozess von selbst durch die Passivierung der Oberfläche zum Stillstand kommt. Es ist wahrscheinlich, dass sich dabei Siliciumdioxid bildet, da das molare Verhältnis von Sauerstoff zu Silicium in Oberflächennähe um zirka 0,1 bis 0,2 steigt. Gegebenenfalls kann dieser natürliche Prozess auch beschleunigt werden, zum Beispiel durch Exposition an Sauerstoff und/oder Feuchtigkeit bei einer Temperatur bevorzugt von 20°C bis 250°C, besonders bevorzugt von 60°C bis 120°C.

Eine zweite Ausführungsform ist diejenige, worin die Beschichtung (c) sich zwischen dem Kern (a) und der Beschichtung (b) befindet, insbesondere worin die Beschichtung (c) eine Schichtdicke von 70 bis 500 nm, bevorzugt bis 300 nm, besonders bevorzugt von 100 bis 250 nm aufweist Bei dieser zweiten Ausführungsform ist zudem bevorzugt, dass der Brechungsindex der Beschichtung (b) mindestens 1,7 beträgt. In dieser zweiten Ausführungsform hat die Beschichtung (c) vor allem die Funktion, Goniochromatizität durch Interferenzphänomene zu erzeugen.

In beiden Fällen besteht besonders bevorzugt das Material der Beschichtung (c) aus einem oder mehreren Metalloxiden oder aus einem oder mehreren Metallfluoriden, insbesondere bevorzugt aus einem oder mehreren Oxiden oder gemischten Oxiden von Si, Ti, Zn, Sn, Ge, Zr, Al, Fe, V, Ni, Co, Cu, Cr oder Pb, oder aus einem oder mehreren Fluoriden von Mg oder Ca, besonders bevorzugt aus SiO₂.

Bevorzugt besteht das Material der Beschichtung (c) aus einem oder mehreren der obengenannten Stoffe, wobei jede optisch wirksame Komponente der Beschichtung (c) für sich isoliert betrachtet im wesentlichen transparent ist. Optisch wirksame Komponenten sind solche, deren Abwesenheit in der Beschichtung (c) zu einer Veränderung der Farbe des Effektpigments führt, so dass in klaren Lackierungen enthaltend 2 g/m² Effektpigment auf schwarzer Unterlage bei einem Beobachtungswinkel von 10° unter der Normlichtart D₆₅ ein ΔE*-Wert (CIE-L*A*B*) von mehr als 2 resultiert. Als im wesentlichen transparent sind Komponenten zu betrachten, welche einen Absorptionskoeffizient k von höchstens 0,02 im Bereich zwischen 380 und 800 nm aufweisen.

Ganz besonders bevorzugt ist ein erfindungsgemässes Effektpigment, worin das Material der Beschichtung (c) aus einem oder mehreren Siliciumoxiden besteht, wobei das molare Verhältnis von Sauerstoff zu Silicium im Mittelwert der Beschichtung (c) von 1,0 bis 2,0 beträgt und die Brechungsindizes der Beschichtungen (b) und (c) um mindestens 0,1 verschieden sind, bevorzugt das Verhältnis von Sauerstoff zu Silicium im Mittelwert der Beschichtung (c) von 1,5 bis 2,0 beträgt und die Brechungsindizes der Beschichtungen (b) und (c) um mindestens 0,2 verschieden sind. Dabei ist von besonderem Vorteil, dass beide Beschichtungen (b) und (c) sich aus den gleichen Edukten herstellen lassen.

Besonders bevorzugt sind erfindungsgemässe Pigmente der oben beschriebenen ersten Ausführungsform, worin die Beschichtung (b) eine Schichtdicke von 70 bis 500 nm aufweist, sowie solche der oben beschriebenen zweiten Ausführungsform, worin die Beschichtung (b) eine Schichtdicke von 10 bis 500 nm aufweist.

Die Beschichtung (b) erhält bereits unter den Beschichtungsbedingungen eine für die Verwendung im Pigmentfeld geeignete Morphologie und vorteilhafte optische Eigenschaften, insbesondere wenn die Temperatur dabei zwischen 20°C und 120°C beträgt. Damit entfällt als weiterer Vorteil die für viele bekannte Effektpigmente bestehende Notwendigkeit einer nachträglichen thermischen Behandlung, beispielsweise der in EP 271 767 beschriebenen Rutilisierung bei 850°C oder der in DE 38 08 070 beschriebenen Reduktion von Titandioxid zu niedrigen Titanoxiden bei 750 bis 850°C. Ein ganz besonderer Vorteil der Erfindung ist zudem, dass eine Beschichtung (b) auch im Fall von Partikeln angebracht werden kann, deren Kern einer thermischen Belastung nicht standhält, wie zum Beispiel Aluminium-Flocken.

Es wurde überraschend gefunden, dass es sogar vorteilhaft ist, wenn die Beschichtung (b) einen im wesentlichen amorphen Charakter aufweist, so dass bevorzugt sowohl bei der Beschichtung als auch gegebenenfalls bei einer thermischen Nachbehandlung die Temperatur 250°C nicht überschreiten sollte. Zu beachten ist auch, dass hohe Temperaturen im allgemeinen zum unerwünschten Zerfall der Beschichtung (b) führen.

Eine milde thermische Nachbehandlung bei Temperaturen zwischen 20°C und zirka 120°C bis höchstens 250°C ist jedoch trotzdem möglich. Bevorzugt ist deshalb ein Pigment, worin die Morphologie und die optischen Eigenschaften der Beschichtung (b) bei einer Temperatur von 20°C bis 250°C, bevorzugt bei einer Temperatur von 60°C bis 120°C erhalten werden.

Nebst den Beschichtungen (b) und (c) kann das Pigment noch eine oder mehrere weitere übliche Beschichtungen aufweisen, zum Beispiel eine zusätzliche Schutzschicht oder eine oder mehrere Zwischenschichten. Gegebenenfalls ist es bevorzugt, auch da Stoffe zu verwenden, welche isoliert betrachtet im wesentlichen transparent sind. Dieses Kriterium gilt ganz allgemein ausser bei der Beschichtung (b) immer als bevorzugt, da es zu einer höheren Leuchtkraft führt. Das Auftreten einer schwer festzustellenden Eigenfarbe bei Gemischen von isoliert betrachtet im wesentlichen transparenten Stoffen ist hingegen gegebenenfalls annehmbar.

Eine bevorzugte Ausführungsform der Erfindung ist jedoch ein Pigment, worin die Beschichtungen (b) und (c) in direktem Kontakt stehen, und worin die Brechungsindizes der Beschichtungen (b) und (c) um mindestens 0,1, bevorzugt um mindestens 0,2 verschieden sind.

Die Beschichtungen (b) und (c) werden bevorzugt unmittelbar nacheinander aufgetragen, wobei der Beschichtungsprozess einfach nach Veränderung des Sauerstoffpartialdruckes weitergeführt wird.

Im allgemeinen ist es vorteilhaft, wenn die Beschichtung (b) und gegebenenfalls die Beschichtung (c) je auf beiden Seiten des Kerns (a) angebracht sind. Bevorzugt enthält das erfindungsgemässe Pigment aber darüber hinaus keine weiteren Schichten, mit Ausnahme gegebenenfalls einer Schutzschicht. Eine Schutzschicht kann aus einem beliebigen transparenten Dielektrikum nach der oben aufgeführten Definition bestehen, insbesondere aus einem hochmolekularen organischen Material, und wird besonders dann nutzbringend angebracht, wenn die Beschichtung (b) aussen liegt.

Bevorzugt ist deshalb auch ein erfindungsgemässes Pigment, enthaltend mindestens zwei im wesentlichen aus einem oder mehreren Siliciumoxiden bestehende Beschichtungen (b) und (b') sowie mindestens zwei weitere aus einem festen Material bestehende Beschichtungen (c) und (c'), wobei (b) und (b'), beziehungsweise (c) und (c'), jeweils gleiche Zusammensetzungen und Schichtdicken aufweisen und je spiegelsymmetrisch bezüglich dem Kern (a) angeordnet sind. Besonders bevorzugt ist ein Pigment bestehend ausschliesslich aus dieser Zusammensetzung und gegebenenfalls einer oberflächlichen Schutzschicht.

Auf jedem Fall ist immer ein Pigment bevorzugt, worin sowohl der Kern (a) als auch alle darauf angebrachten Beschichtungen im wesentlichen gleichmässige Schichtdicken aufweisen. Als im wesentlichen gleichmässig ist eine Schicht mit einer Schichtdicke zu betrachten, welche um höchstens ±2% der mittleren Schichtdicke variert.

Die erfindungsgemässe Beschichtung kann nach an sich bekannten Verfahren geschehen, zum Beispiel durch Aufdampfung, kathodische Pulverisation oder chemische Dampfabscheidung, oder auch für gewisse Schichten durch dafür bekannte nasschemische Verfahren, welche beispielsweise in WO 93/08237 und den dort angegebenen weiteren Referenzen beschrieben sind. Allgemeine Methoden zur Aufdampfung, kathodischen Pulverisation oder chemischen Dampfabscheidung sind dem Fachmann bestens bekannt.

Zweckmässig wird bei diesen Verfahren im Vakuum gearbeitet, wobei während des Beschichtungsvorgangs der Druck von 10⁻¹ bis 10⁻⁸ Pa beträgt.

Zweckmässig soll der Druck den Schwellwert nicht übersteigen, über dem Aufdampfung, kathodische Pulverisation oder chemische Dampfabscheidung versagen. Dieser Schwellwert beträgt je nach Apparatur etwa 10⁻² bis 10⁻¹ Pa. Metalloxide mit Ausnahme von Siliciumoxiden werden bevorzugt bei einem Druck von 1,3·10⁻² bis 1,3·10⁻³ Pa aufgedampft.

Bevorzugt werden Fluoride nasschemisch, und Oxide nasschemisch oder durch Aufdampfung, kathodische Pulverisation oder chemische Abscheidung aus der Dampfphase beschichtet Weitere dem Fachmann bekannte Beschichtungsmethoden können jedoch selbstverständlich ebenfalls verwendet werden.

Siliciumoxide werden besonders vorteilhaft durch Aufdampfung von metallischem Silicium in Gegenwart von Sauerstoff beschichtet. Zur Aufdampfung wird Silicium, welches nicht unbedingt rein sein muss, in Gegenwart von gasförmigem (molekularem) Sauerstoff, welches auch nicht unbedingt rein sein muss, unter vermindertem Druck in der Nähe des zu beschichtenden Substrates auf eine hohe Temperatur erhitzt, zum Beispiel auf 500°C bis 2000°C mittels Induktion oder Elektronenkanone.

Es wurde überraschend herausgefunden, dass das Verhältnis von Silicium zu Sauerstoff bei vorgegebener Aufdampfungsrate durch Einstellung des Sauerstoffpartialdruckes präzis gesteuert werden kann. Bei einer Aufdampfungsrate von 0,2 nm·s⁻¹ entsteht bei einem Sauerstoffpartialdruck von etwa 3,0·10⁻⁴ Pa eine Beschichtung der Formel SiO_{0,25}, bei einem auf etwa 1,8·10⁻³ Pa erhöhten Sauerstoffpartialdruck eine Beschichtung der Formel SiO_{0,95} und bei einem Sauerstoffpartialdruck von etwa 1,9·10⁻³ Pa eine Beschichtung der Formel SiO_{1,0}. Für eine Beschichtung der Formel SiO_{1,5} ist ein Sauerstoffpartialdruck von etwa 5·10⁻³ Pa notwendig. Hingegen werden Beschichtungen bestehend hauptsächlich aus SiO₂ erst bei einem wesentlich höheren Sauerstoffpartialdruck erreicht, welcher zweckmässig mindestens 1,0·10⁻² Pa, bevorzugt mindestens 2,0·10⁻² Pa betragen soll (wobei der maximale zulässige oder empfohlene Arbeitsdruck der verwendeten Apparatur selbstverständlich nicht überschritten werden soll). Eine Beschichtung aus SiO₂ kann auch ausgehend von SiO oder SiO2 anstatt von metallischem Silicium aufgedampft werden, wobei der Sauerstoffpartialdruck in diesem Fall auch tiefer als 1,0·10⁻² Pa sein darf.

Die Erfindung betrifft deshalb auch ein Verfahren zur Beschichtung eines Substrates mit einer im wesentlichen aus einem oder mehreren Siliciumoxiden bestehenden Beschichtung, deren molares Verhältnis von Sauerstoff zu Silicium im Mittelwert von 0,25 bis 0,95 beträgt, durch Aufdampfung, kathodische Pulverisation oder chemische Dampfabscheidung von metallischem Silicium in Gegenwart von gasförmigem Sauerstoff bei einem Sauerstoffpartialdruck von 3,0·10⁻⁴ Pa bis 1,8·10⁻³ Pa. Beim Substrat kann es sich um ein beschichtetes oder unbeschichtetes Pigmentkern handeln, oder um ein Substrat mit mindestens einer Dimension grösser als 200 µm und im wesentlichen glatter Oberfläche.

Besonders vorteilhaft ist die besondere, bevorzugte Variante der Aufdampfung, worin sowohl die Beschichtung (b) als auch eine Beschichtung (c) aus metallischem Silicium unmittelbar nacheinander in Gegenwart von Sauerstoff, dessen Partialdruck bei Übergang von der Beschichtung (b) zur Beschichtung (c) geändert wird, beschichtet werden.

Die Erfindung betrifft deshalb auch ein Verfahren zur Beschichtung eines Substrates mit zwei je im wesentlichen aus einem oder mehreren Siliciumoxiden bestehenden Beschichtungen (b") und (c") durch Aufdampfung, kathodische Pulverisation oder chemische Dampfabscheidung von metallischem Silicium in Gegenwart von gasförmigem Sauerstoff, dadurch gekennzeichnet, dass
- das molare Verhältnis von Sauerstoff zu Silicium im Mittelwert der Beschichtung (b") von 0,25 bis 0,95 beträgt,
- das molare Verhältnis von Sauerstoff zu Silicium im Mittelwert der Beschichtung (c") von 1,0 bis 2,0 beträgt, und
- der Sauerstoffpartialdruck im Verlauf des Beschichtungsvorgangs geändert wird.

Bevorzugt sind die Brechungsindizes der Beschichtungen (b") und (c") um mindestens 0,1 verschieden. Die relative Anordnung der Beschichtungen (b") und (c") bezüglich dem Substrat kann beliebig sein und hängt lediglich davon ab, ob der Sauerstoffpartialdruck im Verlauf des Beschichtungsvorgangs gesteigert oder gesenkt wird. Der zu verändernde Sauerstoffpartialdruck liegt im allgemeinen im Bereich von 3,0·10⁻⁴ Pa bis mindestens 2,0·10⁻² Pa und hängt von den gewünschten molaren Verhältnissen von Sauerstoff zu Silicium ab, wobei der zu überschreitende Schwellwert zwischen den Beschichtungen (b") und (c") etwa 1,8·10⁻³Pa bis 1,9·10⁻³Pa beträgt

Zur Herstellung der erfindungsgemässen Pigmente kann man beispielsweise handelsübliche Kernpartikel in Form von Schüttgut verwenden, zum Beispiel Glimmer oder Aluminiumplättchen, welche beispielsweise in einfacher Weise durch Herausstanzen aus Aluminiumfolie oder nach üblichen Verdüsungs- oder Mahltechniken herzustellen sind. Man sollte jedoch darauf achten, dass die Oberfläche weitgehend frei von Fetten oder anderen Belegmitteln ist. Die Beschichtung von Schüttgut erfolgt bei nicht-nasschemischen Methoden zum Beispiel in einem Wirbelschichtreaktor, wie in EP 33 457, DE 38 13 335 oder EP 571 836 beschrieben.

Man kann die erfindungsgemässen Pigmente aber auch in einem Bandverfahren herstellen, wobei auch die Pigmentkeme als kontinuierliche Schicht auf dem Band gebildet werden. Nach dem Aufbringen aller Beschichtungen kann die gesamte multiple Schicht vom Band abgelöst werden, und die Pigmentteilchen werden auf die gewünschte Grösse zerkleinert. Solche Verfahren sind dem Fachmann bestens bekannt und auch beispielsweise in US 5,135,812 und WO 93/08237 gut beschrieben.

Sowohl bei transparenten als auch bei metallisch reflektierenden Kernmaterialien kann prinzipiell nach einer beliebigen dafür bekannten Beschichtungsmethode verfahren werden.

Die erfindungsgemässen Pigmente ergeben brillante, hochgesättigte und helle (leuchtende) Farben und eignen sich deshalb daher ganz besonders gut zur Kombination mit üblichen, transparenten Pigmenten, zum Beispiel mit organischen Pigmenten wie beispielsweise Diketopyrrolopyrrole, Chinacridone, Dioxazine, Perylene, Isoindolinone, usw. Das transparente Pigment kann dabei eine ähnliche Farbe wie das Effektpigment besitzen. Besonders interessante Kombinationseffekte ergeben sich aber in Analogie beispielsweise zu EP 388 932 oder EP 402 943, wenn die Farbe des transparenten Pigments und diejenige des Effektpigments komplementär sind.

Erfindungsgemässe Pigmente der zweiten Ausführungsform, deren Beschichtungen aufgrund der jeweiligen Schichtdicken und Brechungsindexunterschieden zu Interferenzphänomene führen, weisen eine hohe Goniochromatizität auf. Überraschend besitzen aber auch die übrigen erfindungsgemässen Pigmente, darunter auch diejenigen, worin aufgrund der jeweiligen Schichtdicken und Brechungsindexunterschieden eine vemachlässigbare Goniochromatizität auftritt, erstaunlich wertvolle Färbungen. Alle erfindungsgemässen Pigmente können vorzüglich zum Pigmentieren von hochmolekularem organischem Material verwendet werden.

Das hochmolekulare organische Material, zur Pigmentierung dessen die erfindungsgemässen Pigmente oder Pigmentzusammensetzungen verwendet werden können, kann natürlicher oder künstlicher Herkunft sein. Hochmolekulare organische Materialien weisen üblicherweise Molekulargewichte von zirka 10³ bis 10⁷ g/mol oder noch mehr auf. Es kann sich zum Beispiel um Naturharze, trocknende Öle, Gummi oder Casein oder davon abgewandelte Naturstoffe, wie Chlorkautschuk, ölmodifizierte Alkydharze, Viscose, um Celluloseäther oder Ester, wie Ethylcellulose, Celluloseacetat, Cellulosepropionat, Celluloseacetobutyrat oder Nitrocellulose handeln, insbesondere aber um vollsynthetische organische Polymere (Duroplaste und Thermoplaste), wie sie durch Polymerisation, Polykondensation oder Polyaddition erhalten werden. Aus der Klasse der Polymerisationsharze seien in erster Linie Polyolefine, wie Polyethylen. Polypropylen oder Polyisobutylen, ferner substituierte Polyolefine, wie Polymerisate aus Vinylchlorid, Vinylacetat, Styrol, Acrylnitril, Acrylsäure- oder Methacrylsäureester oder Butadien, sowie Kopolymerisate der erwähnten Monomeren, wie insbesondere ABS oder EVA, genannt.

Aus der Reihe der Polyadditionsharze und Polykondensationsharze seien die Kondensationsprodukte von Formaldehyd mit Phenolen, die sogenannten Phenoplaste, und die Kondensationsprodukte von Formaldehyd mit Harnstoff, Thioharnstoff und Melamin, die sogenannten Aminoplaste, die als Lackharze verwendeten Polyester, und zwar sowohl gesättigte, wie zum Beispiel Alkydharze, als auch ungesättigte, wie beispielsweise Maleinatharze, ferner die linearen Polyester und Polyamide, Polyurethane oder Silikone genannt.

Die erwähnten hochmolekularen Verbindungen können einzeln oder in Gemischen, als plastische Massen oder Schmelzen vorliegen. Sie können auch in Form ihrer Monomeren oder im polymerisierten Zustand in gelöster Form als Filmbildner oder Bindemittel für Lacke oder Druckfarben vorliegen, wie zum Beispiel Leinölfimis, Nitrocellulose, Alkydharze, Melaminharze und Hamstoff-Formaldehydharze oder Acrylharze.

Je nach Verwendungszweck erweist es sich als vorteilhaft, die erfindungsgemässen Effektpigmente oder Effektpigmentzusammensetzungen als Toner oder in Form von Präparaten zu verwenden. Je nach Konditionierverfahren oder Applikationszweck kann es von Vorteil sein, dem Effektpigment gewisse Mengen an texturverbessemden Mitteln vor oder nach dem Konditionierprozess zuzufügen, sofern diese keine negative Wirkung bei der Verwendung der Effektpigmente zur Färbung von hochmolekularen organischen Materialen, insbesondere Polyethylen, haben. Als solche kommen insbesondere Fettsäuren mit mindestens 18 C-Atomen, beispielsweise Stearin- oder Behensäure, oder deren Amide oder Metallsalze, insbesondere Mg-Salze, sowie Weichmacher, Wachse, Harzsäuren, wie Abietinsäure, Kolophoniumseife, Alkylphenole oder aliphatische Alkohole, wie Stearylalkohol oder aliphatische 1,2-Dihydroxy-verbindungen mit 8 bis 22 C-Atomen, wie 1,2-Dodecandiol, ferner modifizierte Kolophoniummaleinatharze oder Fumarsäurekolophoniumharze in Betracht. Die texturverbessernden Mittel werden vorzugsweise in Mengen von 0,1 bis 30 Gew.-%, insbesondere 2 bis 15 Gew.-%, bezogen auf das Endprodukt, zugesetzt.

Die erfindungsgemässen Effektpigmente können in beliebiger färberisch wirksamer Menge dem zu pigmentierenden hochmolekularen organischen Material zugesetzt werden. Zweckmässig ist eine pigmentierte Stoffzusammensetzung, enthaltend ein hochmolekulares organisches Material und von 0,1 bis 30 Gew.-%, bevorzugt 1 bis 20 Gew.-%, bezogen auf das hochmolekulare organische Material, eines erfindungsgemässen Pigments. Vielfach können in der Praxis Konzentrationen um zirka 10 Gew.-% verwendet werden.

Zur Pigmentierung von organischen Materialen können die erfindungsgemässen Effektpigmente einzeln gebraucht werden. Es ist aber ebenfalls möglich, zwecks Erzielung verschiedener Farbtöne oder Farbeffekte den hochmolekularen, organischen Stoffen neben den erfindungsgemässen Effektpigmenten andere farbgebende Bestandteile wie Weiss-, Bunt-, Schwarz- oder Effektpigmente in beliebigen Mengen zuzufügen. Werden Buntpigmente im Gemisch mit den erfindungsgemässen Effektpigmenten eingesetzt, so geschieht dies bevorzugt in einer gesamten Menge von 0,1 bis 10 Gew.-%, bezogen auf das hochmolekulare organische Material. Eine besonders hohe Goniochromatizität besitzt die bevorzugte Kombination eines erfindungsgemässen Effektpigments mit einem Buntpigment anderer, insbesondere komplementärer Farbe, wobei Ausfärbungen des Effektpigments und Ausfärbungen des Buntpigments bei einem Messwinkel von 10° einen Farbtonunterschied (ΔH*) von 20 bis 340, insbesondere von 150 bis 210 aufweisen.

Bevorzugt werden die erfindungsgemässen Effektpigmente mit transparenten Buntpigmenten kombiniert, wobei die transparenten Buntpigmente sowohl im gleichen Medium wie die erfindungsgemässen Effektpigmente als auch in einem benachbarten Medium sein können. Beispiel einer Anordnung, wo das Effektpigment und das Buntpigment mit Vorteil in benachbarten Medien vorliegen, ist eine mehrschichtige Effektlackierung.

Die Pigmentierung der hochmolekularen, organischen Substanzen mit den erfindungsgemässen Pigmenten erfolgt beispielsweise derart, dass man ein solches Pigment, gegebenenfalls in Form eines Masterbatches, diesen Substraten unter Verwendung von Walzwerken, Misch- oder Mahlapparaten zumischt Das pigmentierte Material wird hierauf nach an sich bekannten Verfahren wie Kalandrieren, Pressen, Strangpressen, Streichen, Giessen oder Spritzgiessen in die gewünschte endgültige Form gebracht. Alle in der Kunststoffindustrie üblichen Zusätze, wie beispielsweise Weichmacher, Füllstoffe oder Stabilisatoren, können in gebräuchlichen Mengen vor oder nach der Einverleibung des Pigments in die Polymeren eingearbeitet werden. Insbesondere ist es erwünscht, zur Herstellung von nicht starren Formlingen oder zur Verringerung ihrer Sprödigkeit den hochmolekularen Verbindungen vor der Verformung Weichmacher, zum Beispiel Ester der Phosphorsäure, Phthalsäure oder Sebacinsäure, einzuverleiben.

Zum Pigmentieren von Lacken und Druckfarben werden die hochmolekularen organischen Materialien und die erfindungsgemässen Effektpigmente, gegebenenfalls zusammen mit üblichen Zusatzstoffen wie beispielsweise Füllmitteln, anderen Pigmenten, Siccativen oder Weichmachern, in einem gemeinsam organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Bei der Dispergierung eines erfindungsgemässen Effektpigments in das zu pigmentierende hochmolekulare organische Material, sowie bei der Verarbeitung einer erfindungsgemässen Pigmentzusammensetzung, werden bevorzugt Bedingungen eingehalten, unter welchen nur relativ schwache Scherkräfte auftauchen, so dass das Effektpigment nicht in kleinere Bruchstücke zerteilt wird. Die zulässige Scherkraft entspricht etwa derjenigen, welche für den Kern (a) zulässig ist, dessen schonende Dispersion in ein hochmolekulares organisches Material dem Fachmann allgemein gut bekannt ist.

Die erhaltenen Färbungen, beispielsweise in Kunststoffen, Lacken oder Druckfarben, bevorzugt in Lacken oder Druckfarben, besonders bevorzugt in Lacken, zeichnen sich durch vorzügliche Eigenschaften aus, insbesondere durch hohe Sättigung, hohe Helligkeit und ausgezeichneten Echtheiten, sowie bei Interferenzpigmenten zusätzlich hohe Goniochromatizität.

Handelt es sich beim zu pigmentierenden hochmolekularen Material um einen Lack, so handelt es sich insbesondere um einen Speziallack, ganz besonders bevorzugt um einen Automobillack.

Die nachfolgenden Beispiele verdeutlichen die Erfindung:

Beispiele 1-4: Ein 4×4 cm grosses Stück flaches Glas wird als Zielmaterial in eine Vakuumkammer (BAK 600, Balzers AG) gelegt, worin verschiedene vorgelegte Stoffe wahlweise mit einer Elektronenkanone bedampft werden können. Zuerst wird aus vorgelegtem Aluminium unter einem Restdruck von ≤ 1·10⁻³ Pa Stickstoff bei einer Rate von 0,3 nm·s⁻¹ eine 50 nm dicke Schicht metallisches Aluminium aufgebaut, dann wird darauf aus vorgelegtem Silicium (BD 481173-T, 1-5 mm, Balzers AG) unter einem Druck von Pₓ Pa reinem Sauerstoff bei einer Rate von 0,2 nm·s⁻¹ eine dₓ nm dicke, weitgehend amorphe Schicht der Zusammensetzung SiOₓ beschichtet.

Die Schichten erscheinen in brillanten Farben aus allen Blickwinkeln.

Jeweils werden die Schichtdicke dₓ der SiOₓ-Schicht mit einem Mikroabtastgerät und die Stöchiometrie x der SiOₓ-Schicht durch ESCA bestimmt, sowie die Reflexionsfarbe (CIE-L*C*h) bei Beleuchtung mit D₆₅-Normlicht unter einem Beobachtungswinkel von 10° gemessen.

| Beispiel | Pₓ[^{.}10⁻³ Pa] (O₂-Druck) | dₓ [nm] (Schichtdicke) | x in SiOₓ (Stöchiometrie) | L∗(Heiligkeit) | C∗ (Sättigung) | h (Farbton) |
|---|---|---|---|---|---|---|
| 1 | 0,35 | 104 | 0,35 | 65 | 50 | 359 |
| 2 | 1,00 | 100 | 0,82 | 86 | 71 | 90 |
| 3 | 0,55 | 101 | 0,43 | 82 | 54 | 70 |
| 4 | 0,55 | 90 | 0,43 | 82 | 41 | 70 |
| N.B. Die ESCA-Werte können je nach verwendetem Gerät eine relative Ungenauigkeit von bis zu etwa 20% aufweisen. | | | | | | |

Beispiele 5-11 : Ein 4×4 cm grosses Stück flaches Glas wird als Zielmaterial in eine Vakuumkammer (BAK 600, Balzers AG) gelegt, worin verschiedene vorgelegte Stoffe wahlweise mit einer Elektronenkanone bedampft werden können. Zuerst wird aus vorgelegtem Aluminium unter einem Restdruck von ≤ 1·10⁻³ Pa Stickstoff bei einer Rate von 0,3 nm·s⁻¹ eine 50 nm dicke Schicht metallisches Aluminium aufgebaut, dann wird darauf aus vorgelegtem Siliciumdioxid (BD 481689-T, Balzers AG: 99,9% SiO₂) unter einem Druck von 6·10⁻³ Pa Sauerstoff bei einer Rate von 0,2 nm·s⁻¹ eine d₂ nm dicke Schicht SiO₂ beschichtet. Schliesslich wird aus vorgelegtem Silicium (BD 481173-T, 1-5 mm, Balzers AG) unter einem auf pₓ Pa reduzierten Sauerstoffdruck bei einer Rate von 0,2 nm·s⁻¹ eine dₓ nm dicke, weitgehend amorphe Schicht der Zusammensetzung SiOₓ beschichtet.

Die Schichten erscheinen in brillanten Farben aus allen Blickwinkeln.

Jeweils werden die Schichtdicken d₂ der SiO₂-Schicht und dₓ der SiOₓ-Schicht mit einem Mikroabtastgerät und die Stöchiometrie x der SiOₓ-Schicht durch ESCA bestimmt, sowie die Reflexionsfarbe (CIE-L*C*h) bei Beleuchtung mit D₆₅-Normlicht unter einem Beobachtungswinkel von 10° gemessen.

| Beispiel | d₂ [nm] (Schichtdicke) | dₓ [nm] (Schichtdicke) | pₓ[ ·10⁻³Pa] (O₂-Druck) | x in SiOₓ (Stöchiomethe) | L∗(Helligkeit) | C∗ (Sättigung) | h (Farbton) |
|---|---|---|---|---|---|---|---|
| 5 | 118 | 101 | 0,55 | 0,43 | 76 | 24 | 175 |
| 6 | 155 | 101 | 0,55 | 0,43 | 82 | 44 | 134 |
| 7 | 118 | 90 | 0,55 | 0,43 | 63 | 30 | 290 |
| 8 | 155 | 90 | 0,55 | 0,43 | 79 | 44 | 147 |
| 9 | 125 | 55 | 0,5 | 0,41 | 89 | 49 | 71 |
| 10 | 155 | 55 | 0,5 | 0,41 | 90 | 48 | 73 |
| 11 | 197 | 55 | 0,5 | 0,41 | 83 | 27 | 197 |

Die Goniochromatizität der je nach Blickwinkel rosa bis grün aussehenden Muster aus den Beispielen 5, 6, 7, 8 und 11 ist besonders ausgeprägt.

Das Produkt aus dem Beispiel 11 wird unter verschiedenen Beobachtungswinkeln gemessen.

| Beispiel | Messwinkel | Farbe | L∗ (Helligkeit) | C∗ (Sättigung) | h (Farbton) |
|---|---|---|---|---|---|
| 11 | 10° | grünlich | 83 | 27 | 197 |
| 11 | 15° | bläulich | 82 | 23 | 211 |
| 11 | 45 | rosa | 74 | 32 | 339 |
| 11 | 75° | gelb | 84 | 44 | 93 |

Beispiele 12-13 : Man verfährt analog zu Beispiel 11, ersetzt jedoch Aluminium durch Titan, beziehungsweise durch Molybdän.

| Metall | d₂ [nm] (Schichtdicke) | dₓ [nm] (Schichtdicke) | pₓ[·10⁻³ Pa] (O₂-Druck) | x in SiOₓ (Stöchiometrie) | L∗ (Helligkeit) | C∗ (Sättigung) | h (Farbton) |
|---|---|---|---|---|---|---|---|
| Ti | 195 | 55 | 0.5 | 0.41 | 70 | 47 | 208 |
| Mo | 195 | 55 | 0.5 | 0.41 | 62 | 43 | 225 |

Beispiele 14-15 : Man verfährt analog zum Beispiel 10, ersetzt jedoch Siliciumdioxid durch Magnesiumfluorid, beziehungsweise durch Titandioxid.

| Dielektr. | d_{Diel.}[nm] (Schichtdicke) | dₓ [nm] (Schichtdicke) | pₓ[^{.}10⁻³Pa] (O₂-Druck) | x in SiOₓ (Stöchiometrie) | L∗ (Helligkeit) | C∗ (Sättigung) | h (Farbton) |
|---|---|---|---|---|---|---|---|
| MgF₂ | 160 | 55 | 0.5 | 0.41 | 87 | 36 | 34 |
| TiO₂ | 140 | 55 | 0.5 | 0.41 | 84 | 25 | 198 |

Beispiele 16-21 : Ein 4×4 cm grosses Stück flaches Glas wird als Zielmaterial in eine Vakuumkammer (BAK 600, Balzers AG) gelegt, worin verschiedene vorgelegte Stoffe wahlweise mit einer Elektronenkanone bedampft werden können. Zuerst wird aus vorgelegtem Aluminium unter einem Restdruck von ≤ 1·10⁻³ Pa Stickstoff bei einer Rate von 0,3 nm·s⁻¹ eine 50 nm dicke Schicht metallisches Aluminium aufgebaut, dann wird darauf aus vorgelegtem Silicium (BD 481173-T, 1-5 mm, Balzers AG) unter einem Druck von pₓ Pa Sauerstoff bei einer Rate von 0,2 nm·s⁻¹ eine dₓ nm dicke, weitgehend amorphe Schicht der Zusammensetzung SiOₓ beschichtet. Schliesslich wird aus vorgelegtem Siliciumdioxid (BD 481689-T, Balzers AG: 99,9% SiO₂) unter einem auf 6·10⁻³ Pa erhöhten Sauerstoffdruck bei einer Rate von 0,2 nm·s⁻¹ eine d₂ nm dicke Schicht SiO₂ beschichtet.

Die Schichten erscheinen in brillanten Farben aus allen Blickwinkeln.

Jeweils werden die Schichtdicken d₂ der SiO₂-Schicht und dₓ der SiOₓ-Schicht mit einem Mikroabtastgerät und die Stöchiometrie x der SiOₓ-Schicht durch ESCA bestimmt, sowie die Reflexionsfarbe (CIE-L*C*h) bei Beleuchtung mit D₆₅-Normlicht unter einem Beobachtungswinkel von 10° gemessen.

| Beispiel | dₓ[nm] (Schichtdicke) | pₓ[^{.}10⁻³ Pa] (O₂-Druck) | x in SiOₓ (Stöchiometrie) | d₂ [nm] (Schichtdicke) | L^{∗} (Helligkeit) | C^{∗} (Sättigung) | h (Farbton) |
|---|---|---|---|---|---|---|---|
| 16 | 85 | 0,45 | 0,39 | 125 | 82 | 40 | 85 |
| 17 | 98 | 0,5 | 0,41 | 125 | 80 | 42 | 89 |
| 18 | 113 | 0,3 | 0,33 | 125 | 76 | 45 | 63 |
| 19 | 85 | 0,45 | 0,39 | 197 | 80 | 77 | 83 |
| 20 | 98 | 0,5 | 0,41 | 197 | 81 | 80 | 85 |
| 21 | 113 | 0,3 | 0,33 | 197 | 73 | 67 | 61 |

Beispiele 22-34 : Es wird genauso wie in den Beispielen 5-13 und 16-21 verfahren, jedoch wird zur Aufdampfung der Siliciumdioxidschicht als Ausgangsmaterial metallisches Silicium anstatt von Siliciumdioxid unter einem Sauerstoffpartialdruck von 2,0·10⁻³ Pa verwendet. Die Resultate sind mit denjenigen der Beispiele 5-13 und 16-21 vergleichbar.

Beispiel 35 : Ein 10×30 cm grosses Stück 75 µm dicke Celluloseacetatfolie (AC 311075, Goodfellow Inc.) wird als Zielmaterial in eine Vakuumkammer (BAK 600, Balzers AG) gelegt, worin verschiedene vorgelegte Stoffe wahlweise mit einer Elektronenkanone bedampft werden können. Nachaneinander werden darauf folgende Schichten aufgebaut:
- eine 100 nm dicke Schicht SiO₂ aus vorgelegtem Siliciumdioxid unter einem Druck von 6·10⁻³ Pa Sauerstoff bei einer Rate von 0,2 nm·s⁻¹,
- eine 100 nm dicke Schicht der Zusammensetzung SiO_{0,41} aus vorgelegtem Silicium unter einem Druck von 0,5·10⁻³ Pa Sauerstoff bei einer Rate von 0,2 nm·s⁻¹,
- eine 50 nm dicke Schicht metallisches Aluminium aus vorgelegtem Aluminium unter einem Restdruck von ≤ 1·10⁻³ Pa Stickstoff bei einer Rate von 0,3 nm·s⁻¹,
- eine 100 nm dicke Schicht der Zusammensetzung SiO_{0.41} aus vorgelegtem Silicium unter einem Druck von 0,5·10⁻³ Pa Sauerstoff bei einer Rate von 0,2 nm·s⁻¹,
- eine 100 nm dicke Schicht SiO₂ aus vorgelegtem Siliciumdioxid unter einem Druck von 6·10⁻³ Pa Sauerstoff bei einer Rate von 0,2 nm·s⁻¹.

Diese Operation wird mit jeweils neuen Stücken Celluloseacetatfolie mehrmals wiederholt, bis die gewünschte Gesamtfläche beschichtet ist. Dann werden alle Celluloseacetat-Folienstücke zusammen bei Raumtemperatur in einem mit Wasser gefüllten Ultraschallbad behandelt. Die erhaltene Suspension wird filtriert, mit Wasser gewaschen und getrocknet

Man erhält ein brillantes gelbes Pigmentpulver.

Beispiel 36: In einem Dispergator (®Dispermat) werden zusammen während 60 Minuten bei 1500 U/Min folgende Lackkomponenten dispergiert:
1,0 g des nach Beispiel 31 erhaltenen Pigmentes;
13,4 g CAB-Lösung bestehend aus
   41.0 Gew.-Teilen Celluloseacetobutyrat 20%ig in Butanol/Xylol 2:1 (®CAB 531.1, Eastman Chem.)
   1.5 Gew.-Teilen Zirkoniumoctoat,
   18.5 Gew.-Teilen ®Solvesso 150* (ESSO),
   21.5 Gew.-Teilen Butylacetat und
   17.5 Gew.-Teilen Xylol;
5,0 g Polyesterharz (®Dynapol H700, Dynamit Nobel); und
0,6 g Melaminharz (®Maprenal MF 650, Hoechst).

Der so erhaltenen Lack wird mit einem Filmziehgerät (Nassfilmdicke 100 µm) auf eine geeignete Unterlage (schwarz/weiss gestreiftes Karton, Leneta Co.) appliziert, und nach einer Abdunstzeit von 30 Min bei Raumtemperatur 30 Minuten bei 130°C eingebrannt.

Man erhält eine goldene, brillante Färbung mit stark metallischem Effekt sowie ausgezeichneter Licht- und Wetterbeständigkeit.

Beispiel 37 : Man verfährt wie im Beispiel 36, jedoch wird analog zum Beispiel 35 ein Pigment mit folgender Schichtfolge aufgebaut:
- eine 100 nm dicke Schicht der Zusammensetzung SiO_{0,82} aus vorgelegtem Silicium unter einem Druck von 1,0·10⁻³ Pa Sauerstoff bei einer Rate von 0,2 nm·s⁻¹,
- eine 50 nm dicke Schicht metallisches Aluminium aus vorgelegtem Aluminium unter einem Restdruck von ≤ 1·10⁻³ Pa Stickstoff bei einer Rate von 0,3 nm·s⁻¹,
- eine 100 nm dicke Schicht der Zusammensetzung SiO_{0,82} aus vorgelegtem Silicium unter einem Druck von 1,0·10⁻³Pa Sauerstoff bei einer Rate von 0,2 nm·s⁻¹.

Man erhält eine farbstarke gelbe Färbung mit ausgezeichneter Licht- und Wetterbeständigkeit.

## Patentansprüche

1. Farbiges Pigment, enthaltend
(a) einen aus einem im wesentlichen transparenten oder metallisch reflektierenden Material bestehenden Kern, und
(b) mindestens eine im wesentlichen aus einem oder mehreren Siliciumoxiden bestehende Beschichtung,
**dadurch gekennzeichnet, dass** das molare Verhältnis von Sauerstoff zu Silicium im Mittelwert der Beschichtung (b) von 0,25 bis 0,95 beträgt.

2. Pigment nach Anspruch 1, worin der Kern plättchenförmig ist, mit einer Länge von 1 bis 200 µm, einer Breite von 1 bis 200 µm und einer Dicke von 0,01 bis 5 µm.

3. Pigment nach Anspruch 1, worin der Kern aus einem metallisch reflektierenden Material, bevorzugt aus Ag, Al, Au, Cu, Cr, Ge, Mo, Ni, Si, Ti, deren Legierungen, Graphit, Fe₂O₃ oder MoS₂, besonders bevorzugt aus Al oder MoS₂ besteht.

4. Pigment nach Anspruch 3, worin der Kern mindestens 35% des senkrecht auf dessen Oberfläche einfallenden Lichtes im Bereich von 380 bis 800 nm reflektiert.

5. Pigment nach Anspruch 1, worin das Kemmaterial aus einem transparenten Material, bevorzugt aus Glimmer besteht.

6. Pigment nach Anspruch 1, worin das molare Verhältnis von Sauerstoff zu Silicium von 0,6 bis 0,8 beträgt.

7. Pigment nach Anspruch 1, worin die Beschichtung (b) eine Schichtdicke von 10 bis 500 nm aufweist, bevorzugt worin die Beschichtung (b) eine Schichtdicke von 70 bis 500 nm aufweist.

8. Pigment nach Anspruch 1, worin die Morphologie und die optischen Eigenschaften der Beschichtung (b) bei einer Temperatur von 20°C bis 250°C, bevorzugt bei einer Temperatur von 60°C bis 120°C erhalten werden.

9. Pigment nach Anspruch 1, worin die Beschichtung (b) einen im wesentlichen amorphen Charakter aufweist.

10. Pigment nach Anspruch 1, enthaltend
(a) einen aus einem im wesentlichen transparenten oder metallisch reflektierenden Material bestehenden Kern,
(b) mindestens eine im wesentlichen aus einem oder mehreren Siliciumoxiden bestehende Beschichtung, und
(c) mindestens eine weitere, auf die gleiche Seite des Kerns (a) wie die Beschichtung (b) angebrachte, aus einem beliebigen festen Material bestehende Beschichtung, deren Zusammensetzung von derjenigen der Beschichtung (b) unterschiedlich ist,
in beliebiger relativer Anordnung der Beschichtungen (b) und (c) bezüglich dem Kern (a), **dadurch gekennzeichnet, dass** das molare Verhältnis von Sauerstoff zu Silicium im Mittelwert der Beschichtung (b) von 0,25 bis 0,95 beträgt.

11. Pigment nach Anspruch 10, worin das Material der Beschichtung (c) aus einem oder mehreren Metalloxiden oder aus einem oder mehreren Metallfluoriden besteht, bevorzugt aus einem oder mehreren Oxiden oder gemischten Oxiden von Si, Ti, Zn, Sn, Ge, Zr, Al, Fe, V, Ni, Co, Cu, Cr oder Pb, oder aus einem oder mehreren Fluoriden von Mg oder Ca, besonders bevorzugt aus SiO₂ besteht.

12. Pigment nach Anspruch 10, worin die Beschichtung (b) sich zwischen dem Kern (a) und der Beschichtung (c) befindet, und die Beschichtung (c) eine Schichtdicke von 0,1 bis 200 nm aufweist.

13. Pigment nach Anspruch 10, worin die Beschichtung (c) sich zwischen dem Kern (a) und der Beschichtung (b) befindet und eine Schichtdicke von 70 bis 500 nm, bevorzugt bis 300 nm, besonders bevorzugt von 100 bis 250 nm aufweist.

14. Pigment nach Anspruch 13, worin der Brechungsindex der Beschichtung (b) mindestens 1,7 beträgt.

15. Pigment nach Anspruch 13, worin das Material der Beschichtung (c) aus einem oder mehreren Siliciumoxiden besteht, wobei das molare Verhältnis von Sauerstoff zu Silicium im Mittelwert der Beschichtung (c) von 1,0 bis 2,0 beträgt und die Brechungsindizes der Beschichtungen (b) und (c) um mindestens 0,1 verschieden sind, bevorzugt das Verhältnis von Sauerstoff zu Silicium im Mittelwert der Beschichtung (c) von 1,5 bis 2,0 beträgt und die Brechungsindizes der Beschichtungen (b) und (c) um mindestens 0,2 verschieden sind.

16. Pigment nach Anspruch 10, worin die Beschichtungen (b) und (c) in direktem Kontakt stehen, und worin die Brechungsindizes der Beschichtungen (b) und (c) um mindestens 0,1, bevorzugt um mindestens 0,2 verschieden sind.

17. Pigment nach Anspruch 10, enthaltend mindestens zwei im wesentlichen aus einem oder mehreren Siliciumoxiden bestehende Beschichtungen (b) und (b') sowie mindestens zwei weitere aus einem festen Material bestehende Beschichtungen (c) und (c'), wobei (b) und (b'), beziehungsweise (c) und (c'), jeweils gleiche Zusammensetzungen und Schichtdicken aufweisen und je spiegelsymmetrisch bezüglich dem Kern (a) angeordnet sind.

18. Pigment nach Anspruch 17, bestehend aus einem flachen Kern (a) und je einer Beschichtung (b), (b'), (c) und (c').

19. Pigment nach Anspruch 17, bestehend aus einem Pigment nach Anspruch 18 und einer oberflächlichen Schutzschicht.

20. Pigment nach einem der Ansprüche 1 bis 19, worin sowohl der Kern (a) als auch alle darauf angebrachten Beschichtungen im wesentlichen gleichmässige Schichtdicken aufweisen.

21. Beschichtetes transparentes oder metallisch reflektierendes Substrat mit im wesentlichen glatter Oberfläche und mindestens einer Dimension grösser als 200 µm, enthaltend eine Schicht aus einem oder mehreren Siliciumoxiden, **dadurch gekennzeichnet, dass** das molare Verhältnis von Sauerstoff zu Silicium im Mittelwert dieser Siliciumoxidschicht von 0,25 bis 0,95 beträgt

22. Beschichtetes Substrat nach Anspruch 21, welches zusätzlich eine weitere, aus einem beliebigen festen Material bestehende Schicht aufweist, deren Zusammensetzung von derjenigen der Siliciumoxidschicht mit molarem Verhältnis von Sauerstoff zu Silicium von 0,25 bis 0,95 unterschiedlich ist.

23. Verfahren zur Beschichtung eines Substrates mit einer im wesentlichen aus einem oder mehreren Siliciumoxiden bestehenden Beschichtung, deren molares Verhältnis von Sauerstoff zu Silicium im Mittelwert von 0,25 bis 0,95 beträgt, durch Aufdampfung, kathodische Pulverisation oder chemische Dampfabscheidung von metallischem Silicium in Gegenwart von gasförmigem Sauerstoff bei einem Sauerstoffpartialdruck von 3,0·10⁻⁴ Pa bis 1,8·10⁻³ Pa.

24. Verfahren zur Beschichtung eines Substrates mit zwei je im wesentlichen aus einem oder mehreren Siliciumoxiden bestehenden Beschichtungen (b") und (c") durch Aufdampfung, kathodische Pulverisation oder chemische Dampfabscheidung von metallischem Silicium in Gegenwart von gasförmigem Sauerstoff, **dadurch gekennzeichnet, dass**
- das molare Verhältnis von Sauerstoff zu Silicium im Mittelwert der Beschichtung (b") von 0,25 bis 0,95 beträgt,
- das molare Verhältnis von Sauerstoff zu Silicium im Mittelwert der Beschichtung (c") von 1,0 bis 2,0 beträgt, und
- der Sauerstoffpartialdruck im Verlauf des Beschichtungsvorgangs geändert wird.

25. Pigmentierte Stoffzusammensetzung, enthaltend ein hochmolekulares organisches Material und von 0,1 bis 30 Gew.-%, bevorzugt 1 bis 20 Gew.-%, bezogen auf das hochmolekulare organische Material, eines Pigments nach Anspruch 1.

26. Stoffzusammensetzung nach Anspruch 25, worin das hochmolekulare organische Material ein Lack oder eine Druckfarbe, bevorzugt ein Automobillack ist.

27. Verwendung eines Pigments nach Anspruch 1 zum Pigmentieren von hochmolekularem organischem Material.

## Claims

1. A coloured pigment, comprising
(a) a core consisting of a substantially transparent or metallically reflecting material, and
(b) at least one coating consisting essentially of one or more than one silicon oxide,
wherein the molar ratio of oxygen to silicon at the average value of coating (b) is from 0.25 to 0.95.

2. A pigment according to claim 1, wherein the core is of platelet form and is 1 to 200 *µ*m long, 1 to 200 *µ*m wide and 0.01 to 5 *µ* m thick.

3. A pigment according to claim 1, wherein the core consists of a metallically reflecting material, preferably of Ag, Al, Au, Cu, Cr, Ge, Mo, Ni, Si, Ti, alloys thereof, graphite, Fe₂O₃ or MoS₂, particularly preferably of Al or MOS₂.

4. A pigment according to claim 3, wherein the core reflects at least 35% of the light falling vertically on its surface in the range from 380 to 800 nm.

5. A pigment according to claim 1, wherein the core material consists of a transparent material, preferably mica.

6. A pigment to claim 1, wherein the molar ratio of oxygen to silicon is from 0.6 to 0.8.

7. A pigment according to claim 1, wherein coating (b) has a layer thickness of 10 to 500 nm, preferably wherein coating (b) has a layer thickness of 70 to 500 nm.

8. A pigment according to claim 1, wherein the morphology and the optical properties of coating (b) are obtained at a temperature of 20°C to 250°C, preferably 60°C to 120°C.

9. A pigment according to claim 1, wherein coating (b) is of substantially amorphous character.

10. A pigment according to claim 1, comprising
(a) a core consisting of a substantially transparent or metallically reflecting material,
(b) at least one coating consisting essentially of one or more than one silicon oxid, and
(c) at least one further coating which is applied on the same side of core (a) as coating (b) and which consists of any solid material, the composition of which coating is different from that of coating (b),
in any relative arrangement of coatings (b) and (c) in relation to core (a), wherein the molar ratio of oxygen to silicon at the average value of coating (b) is from 0.25 to 0.95.

11. A pigment according to claim 10, wherein the material of coating (c) consists of one or more than one metal oxide or of one or more than one metal fluoride, preferably of one or more than one oxide or mixed oxide of Si, Ti, Zn, Sn, Ge, Zr, Al, Fe, V, Ni, Co, Cu, Cr, or Pb, or of one or more than one fluoride of Mg or Ca, particularly preferably of SiO₂.

12. A pigment according to claim 10, wherein coating (b) is between core (a) and coating (c), and coating (c) has a layer thickness of 0.1 to 200 nm.

13. A pigment according to claim 10, wherein coating (c) is between core (a) and coating (b) and has a layer thickness of 70 to 500 nm, preferably up to 300 nm, particularly preferably of 100 to 250 nm.

14. A pigment according to claim 13, wherein the refractive index of coating (b) is at least 1.7.

15. A pigment according to claim 13, wherein the material of coating (c) consists of one or more than one silicon oxide, the molar ratio of oxygen to silicon at the average value of coating (c) being from 1.0 to 2.0 and the refractive indices of coatings (b) and (c) differing by at least 0.1, preferably the ratio of oxygen to silicon at the average value of coating (c) being from 1.5 to 2.0 and the refractive indices of coatings (b) and (c) differing by at least 0.2.

16. A pigment according to claim 10, wherein coatings (b) and (c) are in direct contact and wherein the refractive indices of coatings (b) and (c) differ by at least 0.1, preferably by at least 0.2.

17. A pigment according to claim 10, comprising at least two coatings (b) and (b'), consisting essentially of one or more than one silicon oxide, and at least two further coatings (c) and (c'), consisting of a solid material, where (b) and (b'), and (c) and (c'), respectively, each have the same composition and layer thickness and are each arranged in mirror symmetry in relation to core (a).

18. A pigment according to claim 17, consisting of a flat core (a) and one each of coatings (b), (b'), (c) and (c').

19. A pigment according to claim 17, consisting of a pigment according to claim 18 and a surface protective layer.

20. A pigment according to any one of claims 1 to 19, wherein core (a) and all coatings applied thereto have substantially uniform layer thicknesses.

21. A coated transparent or metallically reflecting substrate having a substantially smooth surface and having at least one dimension which is greater than 200 µm, comprising a layer of one or more than one silicon oxide, wherein the molar ratio of oxygen to silicon at the average value of this silicon oxide layer is 0.25 to 0.95.

22. A coated substrate according to claim 21, which further comprises an additional layer consisting of any solid material, the composition of which layer differs from that of the silicon oxide layer having a molar ratio of oxygen to silicon of from 0.25 to 0.95.

23. A process for coating a substrate with a coating consisting essentially of one or more than one silicon oxide, the molar ratio of oxygen to silicon at the average value of this coating being from 0.25 to 0.95, by vacuum evaporation, cathodic sputtering or chemical vapor deposition of metallic silicon in the presence of gaseous oxygen at an oxygen partial pressure of 3.0·10⁻⁴ Pa to 1.8·10⁻³ Pa.

24. A process for coating a substrate with two coatings (b") and (c"), each consisting essentially of one or more than one silicon oxide, by vacuum evaporation, cathodic sputtering or chemical vapor deposition of metallic silicon in the presence of gaseous oxygen, wherein
- the molar ratio of oxygen to silicon at the average value of coating (b") is from 0.25 to 0.95,
- the molar ratio of oxygen to silicon at the average value of coating (c") is from 1.0 to 2.0, and
- the oxygen partial pressure is changed in the course of the coating operation.

25. A pigmented composition, comprising a high molecular weight organic material and from 0.1 to 30% by weight, preferably from 1 to 20% by weight, based on the high molecular weight organic material, of a pigment according to claim 1.

26. A composition according to claim 25, wherein the high molecular weight organic material is a paint or a printing ink, preferably an automotive paint.

27. The use of a pigment according to claim 1 for pigmenting high molecular weight organic material.

## Revendications

1. Pigment coloré contenant
(a) un noyau constitué par une matière essentiellement transparente ou à reflets métalliques, et
(b) au moins un revêtement constitué essentiellement par un ou plusieurs oxydes de silicium
**caractérisé en ce que** le rapport molaire de l'oxygène au silicium est de 0,25 à 0,95 de la moyenne du revêtement (b).

2. Pigment selon la revendication 1, où le noyau se présente sous forme de pailettes, ayant une longueur de 1 à 200 µm, une largeur de 1 à 200 µm et une épaisseur de 0,01 à 5 µm.

3. Pigment selon la revendication 1, où le noyau est constitué par une matière à reflets métalliques en Ag, Al, Au, Cu, Cr, Ge, Mo, Ni, Si, Ti, leurs alliages, le graphite, Fe₂O₃ ou MoS₂, de manière particulièrement préférée Al ou MoS₂.

4. Pigment selon la revendication 3, où le noyau réfléchit au moins 35 % de la lumière incidente verticalement sur sa surface dans le domaine de 380 à 800 nm.

5. Pigment selon la revendication 1, où la matière de noyau est constituée par une matière transparente, de préférence du mica.

6. Pigment selon la revendication 1, où le rapport molaire de l'oxygène au silicium est de 0,6 à 0,8.

7. Pigment selon la revendication 1, où le revêtement (b) présente une épaisseur de couche de 10 à 500 nm, de préférence où le revêtement (b) présente une épaisseur de couche de 70 à 500 nm.

8. Pigment selon la revendication 1, où la morphologie et les propriétés optiques du revêtement (b) sont obtenues à une température de 20°C à 250°C, de préférence à une température de 60°C à 120°C.

9. Pigment selon la revendication 1, où le revêtement (b) présente un caractère essentiellement amorphe.

10. Pigment selon la revendication 1, contenant
(a) un noyau constitué par une matière essentiellement transparente ou à reflets métalliques, et
(b) au moins un revêtement constitué essentiellement par un ou plusieurs oxydes de silicium, et
(c) au moins un autre revêtement déposé sur le même côté du noyau (a) que le revêtement (b), constitué par une matière solide arbitraire, dont la composition est différente de celle du revêtement (b),
dans un assemblage relatif arbitraire des revêtements (b) et (c) par rapport au noyau (a), **caractérisé en ce que** le rapport molaire de l'oxygène au silicium est de 0,25 à 0,95 de la moyenne du revêtement (b).

11. Pigment selon la revendication 10, où la matière de revêtement (c) est constituée par un ou plusieurs oxydes métalliques ou par un ou plusieurs fluorures métalliques, de préférence par un ou plusieurs oxydes de Si, Ti, Zn, Sn, Ge, Zr, Al, Fe, V, Ni, Co, Cu, Cr ou Pb, ou par un ou plusieurs fluorures de Mg ou de Ca, de manière particulièrement préférée par SiO₂.

12. Pigment selon la revendication 10, où le revêtement (b) se trouve entre le noyau (a) et le revêtement (b), et le revêtement (c) présente une épaisseur de couche de 0,1 à 200 nm.

13. Pigment selon la revendication 10, où le revêtement (c) se trouve entre le noyau (a) et le revêtement (b) et présente une épaisseur de couche de 70 à 500 nm, de préférence allant jusqu'à 300 nm, de manière particulièrement préférée de 100 à 250 nm.

14. Pigment selon la revendication 13, où l'indice de réfraction du revêtement est d'au moins 1,7.

15. Pigment selon la revendication 13, où la matière du revêtement (c) est constituée par un ou plusieurs oxydes de silicium, le rapport molaire de l'oxygène au silicium de la moyenne du revêtement (c) est de 1,0 à 2,0 et l'indice de réfraction des revêtements (b) et (c) diffèrent d'au moins 0,1, de préférence le rapport molaire de l'oxygène au silicium de la moyenne du revêtement (c) est de 1,5 à 2,0 et les indices de réfraction des revêtements (b) et (c) diffèrent d'au moins 0,2.

16. Pigment selon la revendication 10, où les revêtements (b) et (c) sont en contact direct, et où les indices de réfraction des revêtements (b) et (c) diffèrent d'au moins 0,1, de préférence d'au moins 0,2.

17. Pigment selon la revendication 10, contenant au moins deux revêtements (b) et (b') constitués par un ou plusieurs oxydes de silicium, ainsi qu'au moins deux autres revêtements (c) et (c') constitués par une matière solide, (b) et (b'), ou (c) et (c') présentant chacun des compositions et des épaisseurs de couche identiques et un assemblage à symétrie spéculaire par rapport au noyau (a).

18. Pigment selon la revendication 17, constitué d'un noyau plat (a) et à chaque fois d'un revêtement (b), (b'), (c) et (c').

19. Pigment selon la revendication 17, constitué par un pigment selon la revendication 18 et par une couche protectrice superficielle.

20. Pigment selon l'une des revendications 1 à 19, où le noyau (a) ainsi que tous les revêtements déposés sur celui-ci présentent des épaisseurs de couche essentiellement uniformes.

21. Substrat transparent ou à reflets métalliques ayant une surface essentiellement lisse et d'une taille au moins supérieure à 200 µm, contenant une couche d'un ou plusieurs oxydes de silicium,
**caractérisé en ce que** le rapport molaire de l'oxygène au silicium de la moyenne de cette couche d'oxyde de silicium est de 0,25 à 0,95.

22. Substrat revêtu selon la revendication 21, qui présente de plus une autre couche constituée par une matière solide arbitraire, dont la composition est différente de celle de la couche d'oxyde de silicium ayant un rapport molaire de l'oxygène au silicium de 0,25 à 0,95.

23. Procédé pour le revêtement d'un substrat d'un revêtement constitué essentiellement par un ou plusieurs oxydes de silicium, dont le rapport molaire de l'oxygène au silicium est en moyenne de 0,5 à 0,95, par dépôt en phase vapeur, pulvérisation cathodique ou dépôt chimique en phase vapeur de silicium métal en présence de l'oxygène gaz pour une pression partielle d'oxygène de 3,0•10⁻⁴ Pa à 1,8•10⁻³ Pa.

24. Procédé pour le revêtement d'un substrat par deux revêtements (b") et (c") constitués chacun essentiellement par un ou plusieurs oxydes de silicium par dépôt en phase vapeur, pulvérisation cathodique ou dépôt chimique en phase vapeur de silicium métal en présence de l'oxygène gaz,
**caractérisé en ce que**
- le rapport molaire de l'oxygène au silicium de la moyenne du revêtement (b") est de 0,25 à 0,95,
- le rapport molaire de l'oxygène au silicium de la moyenne du revêtement (c") est de 1,0 à 2,0, et
- on change la pression partielle au cours du processus de revêtement.

25. Composition pigmentée de matières contenant une matière organique de haut poids moléculaire et de 0,1 à 30 % en masse, de préférence de 1 à 20 % en masse, par rapport à la matière organique de haut poids moléculaire, d'un pigment selon la revendication 1.

26. Composition de matières selon la revendication 25, où la matière organique de haut poids moléculaire est un vernis ou une encre d'imprimerie, de préférence un vernis automobile.

27. Utilisation d'un pigment selon la revendication 1 pour la pigmentation de matière organique de haut poids moléculaire.
